# EUROPEAN PATENT APPLICATION

(11) **EP 3 182 673 A1**
(43) Date of publication of application: **21.06.2017**
(21) Application number: 16753810.7
(22) Date of filing: 19.05.2016
(51) Int. Cl.: H04L 29/06

(54) **MAIN STREAM CONNECTION ESTABLISHMENT METHOD AND DEVICE BASED ON MPTCP**

(30) Priority: 21.10.2015 CN 201510689271
(71) Applicant: LE Holdings (Beijing) Co., Ltd., Beijing 100025 (CN); Leauto Intelligent Technology (BEIJING) Co. Ltd, Beijing 100025 (CN)
(72) Inventor: LONG, Zhi, Beijing 100025 (CN); DU, Zhaofeng, Beijing 100025 (CN); WANG, Lei, Beijing 100025 (CN)
(74) Representative: Lahrtz, Fritz
(86) International application number: PCT/CN2016/082626
(87) International publication number: WO 2017/067160

(57) **Abstract**

The disclsoure includes receiving, by a receiver, an authentication request carrying identify authentication information sent from a sender based on the application layer security connection; after the receiver verifies that the sender is legal according to the identify authentication information, assigning and storing identity information and a first authentication parameter; receiving, by the receiver, a synchronization SYN packet carrying the identity information and a first session key sent from the sender; searching, by the receiver, the first authentication parameter corresponding to the stored identity information carried by the SYN packet, and obtaining a second session key through encrypting the first authentication parameter using the encryption algorithm; and when the first session key matches with the second session key, replying, by the receiver, synchronization confirmation SYN + ACK packet to the sender, and establishing a masterflow connection with the sender after receiving the confirmation ACK packet from the sender.

## Description

### CROSS REFERENCE TO RELATED APPLICATION

This application references to Chinese Patent Application No. 201510689271.7, filed in China on October 21, 2015, entitled "MAINSTREAM CONNECTION ESTABLISHMENT METHOD AND DEVICE BASED ON MULTIPATH TRANSMISSION CONTROL PROTOCOL (MPTCP)", the content of which is incorporated herein by reference in its entirety.

### FIELD OF TECHNOLOGY

The present disclosure is related to the field of telecommunication, and more particular to a masterflow connection establishment method and device based on Multipath Transmission Control Protocol (MPTCP).

### BACKGROUND

MPTCP (Multipath Transmission Control Protocol) is a transport layer protocol using multiple paths to achieve concurrent transmission, which may improve end-to-end throughput and increase network utilization.

The connection based on MPTCP includes masterflow and subflow. The masterflow refers to the first connection established by both parties. The connection established after the first connection refers to the subflow.

In the prior art, the connection based on MPTCP is similar to the connection based on TCP (Transmission Control Protocol), both requiring three handshaking processes. That is when establishing the masterflow, the sender first sends SYN (Synchronous) packet, and the receiver replies SYN+ACK (Synchronous+ Acknowledgement) packet. The SYN packet and the SYN+ACK packet include MP_CAPABLE, indicating both support MPTCP. Then the sender replies ACK (Acknowledgement) packet. Thus the receiver and the sender may establish a masterflow.

However, the inventors discover that in the conventional connection any sender that supports MPTCP may connect to the same receiver. This would result in overloading of the receiver and affects the performance of the receiver.

### SUMMARY

The embodiments of the present disclosure provide a masterflow connection establishment method and device based on Multipath Transmission Control Protocol (MPTCP) to solve the problem in the prior art that any sender that supports MPTCP may connect to a receiver, resulting in the overloading of the receiver and the affection on the performance of the receiver.

The embodiment of the disclsoure provides a masterflow connection establishment method based on Multipath Transmission Control Protocol (MPTCP), including:
receiving, by a receiver, an authentication request carrying identify authentication information sent from a sender based on the application layer security connection;
after the receiver verifies that the sender is legal according to the identify authentication information, assigning and storing identity information and a first authentication parameter for the sender by the receiver;
receiving, by the receiver, a synchronization SYN packet carrying the identity information and a first session key sent from the sender; wherein the first session key is obtained through encrypting the first authentication parameter using the encryption algorithm by the sender;
searching, by the receiver, the first authentication parameter corresponding to the stored identity information carried by the SYN packet, and obtaining a second session key through encrypting the first authentication parameter using the encryption algorithm; and
when the first session key matches with the second session key, replying, by the receiver, synchronization confirmation SYN + ACK packet to the sender, and establishing a masterflow connection with the sender after receiving the confirmation ACK packet from the sender.
The embodiment of the disclsoure provides a masterflow connection establishment method based on Multipath Transmission Control Protocol (MPTCP), including:
sending, by a sender, an authentication request carrying identify authentication information to a receiver based on the application layer security connection;
after the receiver verifies that the sender is legal according to the identify authentication information, receiving identity information and a first authentication parameter assigned for the sender by the sender;
obtaining, by the sender, a first session key through encrypting the first authentication parameter using the encryption algorithm, and sending an SYN packet carrying the identity information and the first session key to the receiver; and
after the sender receives synchronization confirmation SYN + ACK packet sent from the receiver, replying a confirmation packet to the receiver to establish a masterflow connection with the receiver; wherein the SYN + ACK packet is sent after searching, by the receiver, the corresponding stored first authentication parameter according to the identity information of the SYN packet, obtaining a second session key through encrypting the second authentication parameter using the encryption algorithm, and when the first session key matches with the second session key.
The embodiment of the disclsoure provides a masterflow connection establishment device based on Multipath Transmission Control Protocol (MPTCP), including: a processor; and a memory storing one or more instrucitons; wherein when the one or more instuctions are executed by the processor, the processor executes the following steps:
receiving, by a receiver, an authentication request carrying identify authentication information sent from a sender based on the application layer security connection;
after the receiver verifies that the sender is legal according to the identify authentication information, assigning and storing identity information and a first authentication parameter for the sender by the receiver;
receiving, by the receiver, a synchronization SYN packet carrying the identity information and a first session key sent from the sender; wherein the first session key is obtained through encrypting the first authentication parameter using the encryption algorithm by the sender;
searching, by the receiver, the first authentication parameter corresponding to the stored identity information carried by the SYN packet, and obtaining a second session key through encrypting the first authentication parameter using the encryption algorithm; and
when the first session key matches with the second session key, replying, by the receiver, synchronization confirmation SYN + ACK packet to the sender, and establishing a masterflow connection with the sender after receiving the confirmation ACK packet from the sender.
The embodiment of the disclsoure provides a masterflow connection establishment device based on Multipath Transmission Control Protocol (MPTCP), including: a processor; and a memory storing one or more instrucitons; wherein when the one or more instuctions are executed by the processor, the processor executes the following steps:
wherein when the one or more instuctions are executed by the processor, the processor executes the following steps:
sending, by a sender, an authentication request carrying identify authentication information to a receiver based on the application layer security connection;
after the receiver verifies that the sender is legal according to the identify authentication information, receiving identity information and a first authentication parameter assigned for the sender by the sender;
obtaining, by the sender, a first session key through encrypting the first authentication parameter using the encryption algorithm, and sending an SYN packet carrying the identity information and the first session key to the receiver; and
after the sender receives synchronization confirmation SYN + ACK packet sent from the receiver, replying a confirmation packet to the receiver to establish a masterflow connection with the receiver; wherein the SYN + ACK packet is sent after searching, by the receiver, the corresponding stored first authentication parameter according to the identity information of the SYN packet, obtaining a second session key through encrypting the second authentication parameter using the encryption algorithm, and when the first session key matches with the second session key.

In the embodiments of the present disclosure, the receiver first verifies the sender. After the sender is verified as a legal device, an identity information and a first authentication parameter is assigned for the sender and stored. The first session key is obtained through encrypting the first authentication parameter using the encryption algorithm by the sender. The first session key is carried by the SYN packet. The SYN packet further carries the identity information. The receiver searches the stored first authentication parameter according to the identity information of the SYN packet and obtains the second session key using the same encryption algorithm. When the first session key matches with the second session key, it indicates that the sender is a legal device. Therefore, three handshake processes may continue to achieve masterflow connection establishment. In the embodiments of the present disclosure, through the verification on the sender by the receiver, only the legal sender is permitted to establish a masterflow connection with the receiver. The control on the sender is achieved. Therefore, the overloading of the receiver is avoided. The performance of the receiver is improved. Further, through the authentication for the sender, the safety of the masterflow connection is improved. The occupied resources due to the malicious attacks on the devices are avoided to further enhance the performance for the sender.

### BRIEF DESCRIPTION OF THE DRAWINGS

In order to illustrate the technical schemes of the prior art or the embodiments of the present disclosure more clearly, the accompanying drawings for illustrating the prior art or the embodiments of the present disclosure are briefly described as below. It is apparent that the drawings described below are merely some embodiments of the present disclosure, and those skilled in the art may derive other drawings according the drawings described below without creative endeavor. In the drawings:
Fig. 1 illustrates the flow chart of the masterflow connection establishment method based on Multipath Transmission Control Protocol according one embodiment of the present disclosure;
Fig. 2 illustrates the flow chart of the masterflow connection establishment method based on Multipath Transmission Control Protocol according one embodiment of the present disclosure;
Fig. 3 illustrates the signaling diagram for the masterflow connection establishment method based on MPTCP according to another embodiment of the present disclosure;
Fig. 4 illustrates the schematic diagram for the masterflow connection establishment device based on MPTCP according to the embodiment of the disclsoure;
Fig. 5 illustrates the schematic diagram for the masterflow connection establishment device based on MPTCP according to the embodiment of the disclsoure; and
Fig. 6 illustrates the schematic diagram for the masterflow connection establishment device based on MPTCP according to the embodiment of the disclsoure; and
Fig. 7 illustrates the schematic diagram for the masterflow connection establishment device based on MPTCP according to the embodiment of the disclsoure.

### DESCRIPTION OF THE EMBODIMENTS

For the purpose, technical solution, and advantage of the present disclosure becoming clearer, the specific embodiments of the present disclosure combined with the accompanying drawings to clearly and completely are described as follows. Obviously, the described embodiments are only part of the embodiments of the present disclosure rather than all embodiments. Based on the embodiments of the present disclosure all other embodiments obtained by those having ordinary skills in this field without creative work are within the scope of protection of the present disclosure.

The technical solutions of the embodiments in the present disclosure may be applied for any application scenarios that are capable of establishing Multipath Transmission Control Protocol (MPTCP) connection. For example, many devices typically have various network ports with the development of electronic technology. For example, notebook computers may be configured with Ethernet port, Wi-Fi (WIreless-Fidelity) port, Bluetooth port, etc. Mobile terminals are equipped with 2G port, 3G port, 4G port, WiFiport, Bluetooth port, infrared port, etc. Based on MPTCP, the various network ports may be used sufficiently to establish multiple connections. When a connection fails or the resource is insufficient, other connections can be used for data transmission.

In the embodiment of the disclsoure, the sender and the receiver respectively refer to the respective party that establishes the masterflow connection. The sender refers to the party that requests for establishing the masterflow connection. In one practical application, the sender may be referred to the client, and the receiver may be referred to the server. The server may be a real server corresponding to the client, or may be a proxy server when the real server does not support MPTCP.

As described in the background, for the method for establishing the masterflow connection establishment in the prior art, the sender that supports MPTCP arbitrarily can be connected to the same receiver. This results in overloading of the receiver and the performance of the receiver is affected. Further, Malicious devices may also connect to the receiver such that the resource of the receiver is occupied. Thus the normal requests may not be processed and the performance of the receiver is affected.

Therefore, after a series of studies, the inventors propose the technical solutions in the embodiments of the present disclsoure to solve the problem of overloading of the receiver. First, before establishing MPTCP connection, based on the application layer security connection, the receiver performs verification for any senders. After the sender is verified as a legal device, an identity information and a first authentication parameter is assigned for the sender and stored. The first session key is obtained through encrypting the first authentication parameter using the encryption algorithm by the sender. The sender sends a SYN (Synchronous) packet to the receiver in order to request to establish masterflow connection. The SYN packet carries the first session key and the identity information. The receiver searches the stored first authentication parameter according to the identity information of the SYN packet and obtains the second session key using the same encryption algorithm. When the first session key matches with the second session key, it indicates the authentication is successful, and the sender is a legal device. Therefore, three handshake processes may continue to achieve masterflow connection establishment. This shows that in the embodiments of the present disclosure the authentication is performed for the sender. Only the legal sender is permitted to establish a masterflow connection with the receiver. The control on the sender is achieved. Therefore, the overloading of the receiver is avoided. The performance of the receiver is improved. Further, through the authentication for the sender, the safety of the masterflow connection is improved, malicious attacks on the devices are avoided, the process of normal requests are ensured and further the performance for the sender is enhanced.

The following detailed description in conjunction with the accompanying drawings explains embodiments of the present disclosure in details.

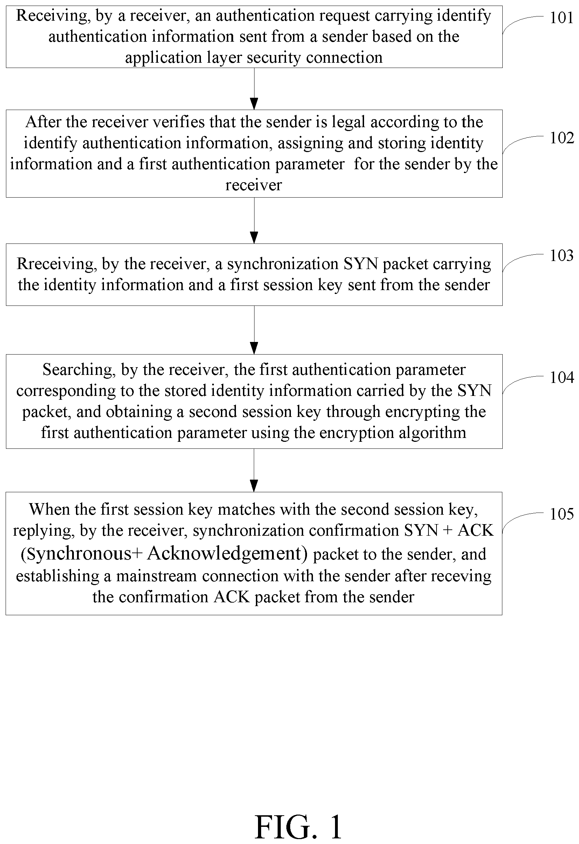

Fig. 1 illustrates the flow chart of the masterflow connection establishment method based on Multipath Transmission Control Protocol according one embodiment of the present disclosure. The method includes the following steps.

101: receiving, by a receiver, an authentication request carrying identify authentication information sent from a sender based on the application layer security connection.

MPTCP is network transport layer protocol. The application layer security connection refers to a connection established based on the secure network application layer protocol. Before establishing MPTCP connection of the transport layer, the authentication request may be sent based on the connection established based on the secure network application layer protocol.

The secure application layer connection may be HTTPS (Hyper Text Transfer Protocol over Secure Socket Layer) connection. HTTPS is a network application layer protocol. MPTCP is a network transport layer protocol. HTTPS is the secure version of HTTP (Hyper Text Transfer Protocol) with safety as the objective, i.e., SSL (Secure Sockets Layer) is added under HTTP. The authentication request sent through HTTP connection would not be intercepted by attackers.

The identity information is used for verification for the sender. The identity information may include the sender's device address, device identification number, user name, etc. The device address may be MAC address. The device identification number and the user name may be confirmed according to the user's configuration.

The receiver may store in advance the identity information of different senders allowed for establishing connection thereof. The senders allowed for establishing connection with the receiver are also the legal senders.

102: after the receiver verifies that the sender is legal according to the identify authentication information, assigning and storing identity information and a first authentication parameter for the sender by the recevier.

The receiver verifies whether the sender is legal through searching whether the identity information of the senders exists among the different identity information stored in advance. When the identity information of the senders exists, it indicates that the sender is allowed for access, and is a legal sender; otherwise it is an illegal sender.

Of course, other verification process may also be adopted. For example, the receiver may identify the identity information to determine whether the access condition is satisfied or not. When it is satisfied, the sender is legal; otherwise it is illegal.

The identity information is unique for identifying different senders.

The receiver may assign the first authentication parameter for the sender of the identity information. In order to further improve the security of connections, different sender is assigned with different first authentication parameter. The first authentication parameter may be any numbers, characters, strings, etc., and may be a key generated by the receiver.

103: receiving, by the receiver, a synchronization SYN packet carrying the identity information and a first session key sent from the sender.

Wherein the first session key is obtained through encrypting the first authentication parameter using the encryption algorithm by the sender.

The receiver sends the identity information and the first authentication parameter to the sender based on the application layer security connection. The sender then obtains the first session key through encrypting the first authentication parameter using the encryption algorithm.

In order to further improve the safety of the masterflow connection, the encryption algorithm may adopt the irreversible encryption algorithm to prevent the SYN packet from being stealing and encoded by malicious equipments to further obtain the first authentication parameter for malicious connection.

The encryption algorithm may also be MD5 (Message-Digest Algorithm 5) or SHA1 (Secure Hash Algorithm).

The sender writes the first session key and the identity information into the SYN packet and sends the written SYN packet to the receiver to request to establish the masterflow connection.

104: searching, by the receiver, the first authentication parameter corresponding to the stored identity information carried by the SYN packet, and obtaining a second session key through encrypting the first authentication parameter using the encryption algorithm.

105: when the first session key matches with the second session key, replying, by the receiver, synchronization confirmation SYN + ACK (Synchronous+ Acknowledgement) packet to the sender, and establishing a masterflow connection with the sender after receiving the confirmation ACK packet from the sender.

After the receiver receives the SYN packet and before replying SYN+ACK packet, it requires verification on the sender for verifying whether it is legal or not. Specifically, it may search the first authentication parameter corresponding to the identity information of the SYN packet from the stored identity information and the first authentication parameter assigned for different legal senders. Then the session key may be obtained through encrypting the first authentication parameter using the same encryption algorithm.

When the first session key matched with the second session key, because only the two session keys generated by the same first authentication parameter matches with each other, this indicates the sender is legal, and the verification is successful. Otherwise it is not legal, and the verification fails.

After the verification is successful, it may then complete the three handshake processes to achieve masterflow connection establishment.

When the verification fails, the masterflow connection is cancelled.

Match between the first session key and the second session key specifically indicates that the first session key is the same as the second session key.

In this embodiment, the receiver assigns and stores the identity information and the first authentication parameter for legal senders. After the sender obtains the first session key through encrypting the first authentication parameter, the sender sends the SYN packet carrying the first session key and the identity information to the receiver. The receiver obtains the second session key though encrypting the first authentication parameter corresponding to the identity information in the SYN packet. When the first session key and the session key matches, it indicates that the sender and the receiver use the same first authentication parameter for encrypting. Because the sender is a legal device for the receiver, it may continue three handshaking processes to establish the masterflow connection. The safety of the masterflow connection is enhanced through verification on the sender, and the malicious connection is prevented from establishment. In the meanwhile, the control on the sender by the receiver is achieved. Only legal senders may establish masterflow connection with the receiver. Therefore, the overloading problem of the receiver is avoided.

In the embodiment, after the sender established the masterflow connection wit the receiver, it may continue establishing the sub flow connection. The process for establishing the sub flow connection may be achieved by the existing approaches. In the existing approaches, when establishing the subflow connection, three handshake processes are still adopted. During the handshaking process, the SYN packet would carry the first random parameter, and the SYN+ACK packet would carry the second random parameter and the first encrypted parameter (HMAC) obtained by encrypting the first random parameter. The ACT packet carries the second random parameter (HAMC) obtained by encrypting the second random parameter. The sender verifies the receiver by using the first random parameter and the first encrypted parameter. The receiver verifies the sender by using the second random parameter and the second encrypted parameter. Thus the safety of the subflow connection is then ensured.

Of course, as another possible implementation, the embodiment of the present disclosure ensures the safety of the masterflow connection. The safety of the masterflow connection also ensures the safety of the subflow connection established based on the masterflow connection. Therefore, the establishment of the subflow connection may also adopt the traditional TCP connection, i.e. establishing the connection through three handshaking processes. The SYN packet, the SYN+ACK packet and the ACL packet do not need to carry the parameter for verification such that the complexity of the subflow connection may be reduced.

To further enhance security, the first session key may specifically be generated by the sender through encrypting the first authentication parameter and the second authentication parameter generated by the sender by using the encryption algorithm.

The second authentication parameter may be random number generated by the sender, such as numbers, characters, strings, etc. In the meanwhile, the SYN packet further needs to carry the second authentication parameter such that the receiver specifically obtains the second session key by encrypting the first authentication parameter corresponding to the analyzed identity information and the analyzed second authentication parameter.

Therefore, as still another embodiment, the step 104 of searching the first authentication parameter corresponding to the stored identity information carried by the synchronization packet, and obtaining a second session key through encrypting the first authentication parameter using the encryption algorithm may specifically includes:
searching the first authentication parameter corresponding to the stored the identity information carried by the synchronization packet, and obtaining the second session key through encrypting the first authentication parameter and the second authentication parameter using the encryption algorithm.

Therefore, as still another embodiment, in order to achieve flexible control on the masterflow connection, the activation of the authentication function may be controlled by way of configuring Socket.

When starting the authentication function, the sender and the receiver may establish the masterflow connection according the technical solutions described in the above embodiment. At this time, if the receiver receives the transitional TCP connection request or the masterflow connection request sent based on the current method, it may refuse to establish the connection directly.

When the authentication function does not start, the sender sends the SYN packet according to the current approaches to request for the masterflow connection establishment. The receiver also processes the request for the masterflow connection establishment according to the current approaches.

Therefore, in the embodiment of the present disclosure, after the step 103 of receiving, by the receiver, a synchronization packet carrying the identity information and the first session key sent from the sender, the method further includes:
determining whether the receiver starts the authentication function; and
when the receiver starts the authentication function, then executing the step 104 of searching the first authentication parameter corresponding to the identity information carried by the synchronization packet, and obtaining the second session key through encrypting the first authentication parameter using the encryption algorithm.

Before the sender obtains the first session key through encrypting the first authentication parameter using the encryption algorithm, and sends the SYN packet carrying the first session key and the identity information to the receiver, the method may first determines whether the sender starts the authentication function.

When the sender starts the authentication function, then the method executes the step of obtaining the first session key through encrypting the first authentication parameter using the encryption algorithm and sending the SYN packet carrying the first session key and the identity information to the receiver.

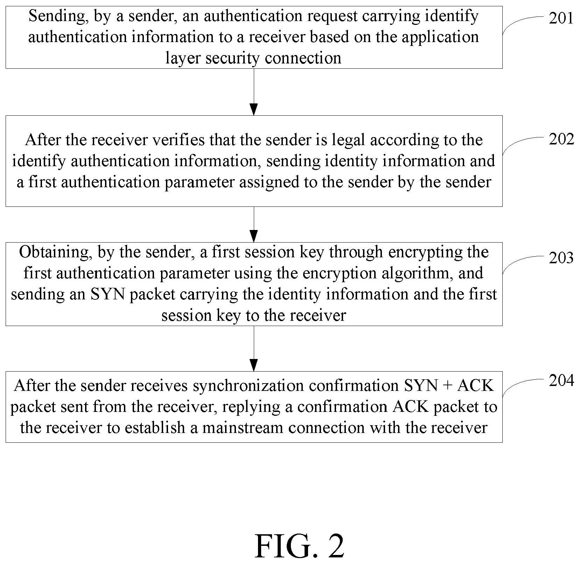

Fig. 2 illustrates the flow chart of the masterflow connection establishment method based on Multipath Transmission Control Protocol according one embodiment of the present disclosure. This embodiment explains the technical solution from the sender's point of view. The method includes the following steps.
201: sending, by a sender, an authentication request carrying identify authentication information to a receiver based on the application layer security connection;
202: after the receiver verifies that the sender is legal according to the identify authentication information, receiving identity information and a first authentication parameter assigned for the sender by the sender;
203: obtaining, by the sender, a first session key through encrypting the first authentication parameter using the encryption algorithm, and sending an SYN packet carrying the identity information and the first session key to the receiver;
204: after the sender receives synchronization confirmation SYN + ACK packet sent from the receiver, replying a confirmation ACK packet to the receiver to establish a masterflow connection with the receiver;
wherein the SYN + ACK packet is sent after searching, by the receiver, the corresponding stored first authentication parameter according to the identity information of the SYN packet, obtaining a second session key through encrypting the second authentication parameter using the encryption algorithm, and when the first session key.

To further enhance security, the sender may generate a second authentication parameter. The step 203 of obtaining a first session key through encrypting the first authentication parameter using the encryption algorithm may specifically includes:
obtaining the first session key through encrypting the first authentication parameter and the generated second authentication parameter using the encryption algorithm.

The second authentication parameter is a random number generated by the sender, such as numbers, characters, strings, etc. At this time, the SYN packet further needs to carry the second authentication parameter such that the receiver specifically obtains the second session key by encrypting the first authentication parameter corresponding to the analyzed identity information and the analyzed second authentication parameter.

For the masterflow connection establishment based on the MPTCP, during the three handshaking processes, the interactive SYN packet and the SYN+ACK packet includes MP_CAPABLE option field to indicate that both parties support MPTCP.

The MP_CAPABLE option in the SYN packet includes option Sender's key field. In the embodiment of the present disclsoure, the first session key is written into the option Sender's key field.

In order to carry the identity information, in the embodiment of the disclsoure, the option Receiver's key field may be added in the MP_CAPABLE option of the SYN packet to write the identity information. The receiver may obtain different contents by analyzing the different fields.

Therefore, as another embodiment, the step of obtaining a first session key through encrypting the first authentication parameter using the encryption algorithm, and sending an SYN packet carrying the identity information and the first session key to the receiver may include:
obtaining the first session key through encrypting the first authentication parameter and the generated second authentication parameter using the encryption algorithm; and
writing the first session key into the option Sender's key field of the MP_CAPABLE option of the SYN packet;
adding the option Receiver's key field in the MP_CAPABLE option of the SYN packet, and writing the identity information and the first random parameter into the option Receiver's key field in the MP_CAPABLE option;
sending the SYN packet to the receiver.

Through the embodiments of the present disclosure, when establishing the masterflow connection, the verification is executed for the sender such that only legal sender may establish the masterflow connection with the receiver. Therefore, the security of the masterflow connection is improved, and the malicious attacks are prevented. Further, it also facilitates the receiver for control. The receiver may store the information for the senders that are allowed for establishing the masterflow connection such that the loading of the receiver would be over.

In the embodiment of the present disclosure, the sender and the receiver may refer to the respective party that establishes the masterflow connection. In one practical application, the sender may be the client, such as the different applications in the module phone, and the receiver may be the application server corresponding to the application.

Because some application server may not support the MPTCP, the client and the application server may be connected by a proxy server that supports MPTCP. The proxy server connects to the client and the application server respectively to achieve the data transmission. Therefore, the receiver may also refer to the proxy server.

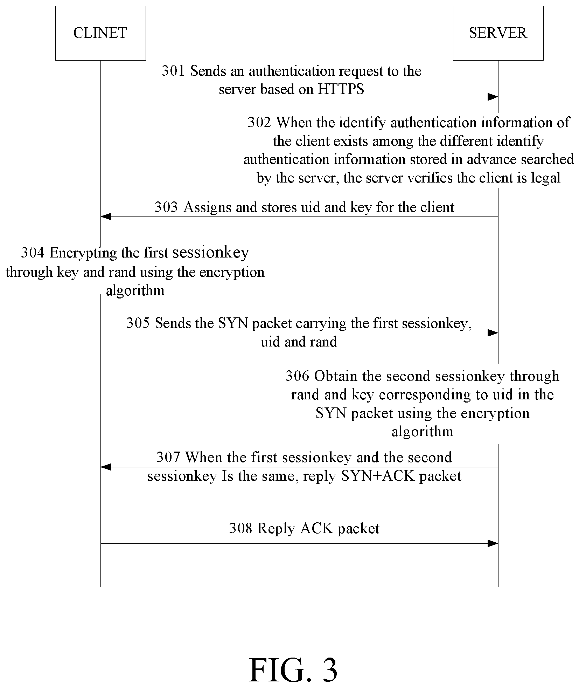

The following takes the client and the server as an example to explain the technical solutions of the embodiments of the present disclosure. The server may be the real server corresponding or the client or the proxy server. As shown in Fig. 3, Fig. 3 illustrates the signaling diagram for the masterflow connection establishment method based on MPTCP according to another embodiment of the present disclosure. The method includes the following steps.

301: the client sends an authentication request to the server based on HTTPS, wherein the authentication request carries identify authentication information.

This embodiment takes HTTP connection as an example for explanation. HTTPS connection is an application layer security connection. Therefore, the malicious interception for the authentication request may be avoided to ensure the transmission security to further ensure the security of MPTCP connection.

302: when the identify authentication information of the client exists among the different identify authentication information stored in advance searched by the server, the server verifies the client is legal.

When the client is not legal, the current process terminates. And the client is remarked such that the masterflow connection request from the same client would be refused when a request for establishing the masterflow connection is sent from the client through the SYN packet.

303: the server assigns and stores the identity information (uid) and the first authentication parameter (key) for the client.

304: the client obtains the first session key (sessionkey) through encrypting the key and the generated second authentication parameter (rand) using the encryption algorithm.

305: the client sends the SYN packet carrying the first sessionkey, uid and rand.

In the embodiment, the client specifically writes the first sessionkey into the option Sender's key field of the MP_CAPABLE option of the SYN packet.

The option Receiver's key field is added into the MP_CAPABLE option of the SYN packet, and writes uid and rand into the option Receiver's key field of the MP_CAPABLE option.

306: the server searches the stored key corresponding to uid carried by the SYN packet, and obtains the second sessionkey through encrypting the key and the rand of the SYN packet using the encryption algorithm.

307: the server determines that the first sessionkey and the second sessionkey is the same through comparison, and then replies the SYN+ACK packet to the client.

309: after the client receives the SYN+ACK packet, the client replies the ACK packet to the server.

Thus the server and the client may establish the masterflow connection.

Through the embodiment, the security of the masterflow connection is ensured and the malicious connection that may occupy the resources of the server is prevented. The server load is ensured not being too heavy. Also the verification on the client is executed. Only the legal client may establish the masterflow connection with the server to achieve the control on the client, and to further ensure the server loading such that the performance of the server would not be affected.

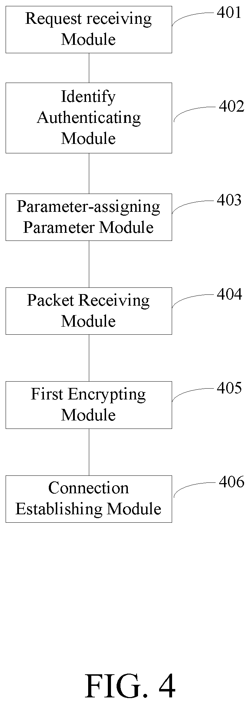

Fig. 4 illustrates the schematic diagram for the masterflow connection establishment device based on MPTCP according to the embodiment of the disclsoure. The device is specifically applied for the receiver. The device may include the following modules.

A request receiving module 401 is used for receiving an authentication request carrying identify authentication information sent from a sender based on the application layer security connection.

The identify authentication information is used for verification on the sender, and may include the sender's device address, device identification number, user name, etc. The device address may be MAC address. The device identification number and the user name may be confirmed according to the user's configuration.

An identify authenticating module 402 is used for verifying whether the sender is legal or not according to the identify authentication information.

An parameter-assigning module 403 is used for assigning and storing identity information and a first authentication parameter after verifying that the sender is legal according to the identify authentication information.

The identity information is unique for identifying different senders.

The receiver may assign the first authentication parameter for the sender of the identity information. In order to further improve the security of connections, different sender is assigned with different first authentication parameter.

The first authentication parameter may be any numbers, characters, strings, etc. and may be a key generated by the receiver.

A packet receiving module 404 is used for receiving a synchronization SYN packet carrying the identity information and a first session key sent from the sender; wherein the first session key is obtained through encrypting the first authentication parameter using the encryption algorithm by the sender;

A first encrypting module 405 is used for searching the first authentication parameter corresponding to the stored identity information carried by the SYN packet, and obtaining a second session key through encrypting the first authentication parameter using the encryption algorithm.

A connection establishing module 406 is used for replying synchronization confirmation SYN + ACK packet to the sender when the first session key matches with the second session key, and establishing a masterflow connection with the sender after receiving the confirmation ACK packet from the sender.

In order to further improve the safety of the masterflow connection, the encryption algorithm may adopt the irreversible encryption algorithm, for example MD5 algorithm, to prevent the SYN packet from being stealing and encoded by malicious equipments to further obtain the first authentication parameter for malicious connection.

In this embodiment, the receiver assigns and stores the identity information and the first authentication parameter for legal senders. After the sender obtains the first session key through encrypting the first authentication parameter, the sender sends the SYN packet carrying the first session key and the identity information such that the second session key is obtained through encrypting the first authentication parameter corresponding to the identity information in the SYN packet. When the first session key and the session key matches, it indicates that the sender is a legal device. Therefore it may continue three handshaking processes to establish the masterflow connection. The safety of the masterflow connection is enhanced through verification on the sender, and the malicious connection is prevented from establishment. In the meanwhile, the control on the sender is achieved. Only legal senders may establish masterflow connection with the receiver. Therefore, the overloading problem of the receiver is avoided.

In one embodiment, the receiver may store in advance the information of different clients that are allowed for access, i.e., the identify authentication information for the legal clients. Therefore, the identify authenticating module is specifically used for whether the identify authentication information of the sender exists among the different identify authentication information stored in advance searched by the receiver, and verifying that the sender is legal when the identify authentication information of the sender exists.

To further enhance security, the first session key is specifically obtained through encrypting the first authentication parameter and a second authentication parameter generated by the sender using the encryption algorithm by the sender. The SYN packet further carries the second authentication parameter.

Therefore, as another embodiment, the searching module is specifically used for searching the first authentication parameter corresponding to the stored identity information carried by the synchronization packet, and obtaining the second session key through encrypting the first authentication parameter and the second authentication parameter using the encryption algorithm.

Further, as another embodiment, in order to achieve flexible control on the masterflow connection, the activation of the authentication function may be controlled by way of configuring Socket. Therefore, as another embodiment, the device may further include:

a first determining module for determining whether the authentication function starts, and triggering the first encrypting module when the authentication function starts.

Therefore, the first encrypting module specifically searches the first authentication parameter corresponding to the stored identity information carried by the SYN packet when the authentication function starts, and obtaining a second session key through encrypting the first authentication parameter using the encryption algorithm.

When the authentication function does not start, the sender sends the SYN packet according to the current approaches to request for the masterflow connection establishment. The receiver also processes the request for the masterflow connection establishment according to the current approaches.

It may be seen from the above description that the masterflow connection establishment device based on MPTCP as shown in Fig. 4 may be applied to the receiver in the actual application. The receiver may be any electronic device or server. The device may be integrated into the processor of the receiver, as a function of the processor, or may be an individual module for connecting to the processor. Therefore, as another possible implementation, the embodiment of the present disclosure further provides a receiver. The receiver as least includes a processor, and a storage, a sender and a receiver connected to the processor respectively.

The storage is used for storing a set of execution commands.

The processor is used for scheduling the execution commands of the storage and executes the following operations:
triggering the receiver to receive an authentication request carrying identify authentication information sent from a sender based on the application layer security connection;
after the receiver verifies that the sender is legal according to the identify authentication information, assigning and storing identity information and a first authentication parameter;
triggering the receiver to receive a synchronization SYN packet carrying the identity information and a first session key sent from the sender; wherein the first session key is obtained through encrypting the first authentication parameter using the encryption algorithm by the sender;
searching the first authentication parameter corresponding to the stored identity information carried by the SYN packet, and obtaining a second session key through encrypting the first authentication parameter using the encryption algorithm; and
triggering the sender to reply synchronization confirmation SYN + ACK packet to the sender when the first session key matches with the second session key; and
establishing a masterflow connection with the sender after receiving the confirmation ACK packet from the sender.

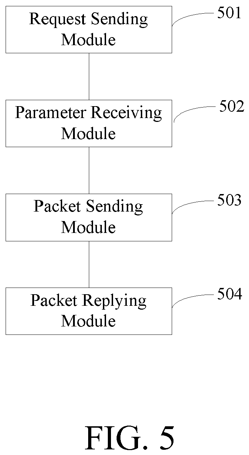

Fig. 5 illustrates the schematic diagram for the masterflow connection establishment device based on MPTCP according to the embodiment of the disclsoure. The device is specifically applied for the sender. The device may include the following modules.

A request sending module 501 is used for sending an authentication request carrying identify authentication information to a receiver based on the application layer security connection.
a parameter receiving module 502 is used for sending assigned identity information and a first authentication parameter to the receiver after receiving that the receiver verifies that the sender is legal according to the identify authentication information.
a packet sending module 503 is used for obtaining a first session key through encrypting the first authentication parameter using the encryption algorithm, and sending an SYN packet carrying the identity information and the first session key to the receiver.
a packet replying module 504 is used for replying a confirmation packet to the receiver after the sender receives synchronization confirmation SYN + ACK packet sent from the receiver to establish a masterflow connection with the receiver; wherein the SYN + ACK packet is sent after searching, by the receiver, the corresponding stored first authentication parameter according to the identity information of the SYN packet, obtaining a second session key through encrypting the second authentication parameter using the encryption algorithm, and when the first session key matches with the second session key.

To further enhance security, the sender may generate a second authentication parameter. Therefore, as another embodiment, the packet sending module for obtaining a first session key through encrypting the first authentication parameter using the encryption algorithm may specifically obtain the first session key through encrypting the first authentication parameter and the generated second authentication parameter using the encryption algorithm.

For the masterflow connection establishment based on the MPTCP, during the three handshaking processes, the interactive SYN packet and the SYN+ACK packet includes MP_CAPABLE option field to indicate that both parties support MPTCP.

The MP_CAPABLE option in the SYN packet includes option Sender's key field. In the embodiment of the present disclsoure, the first session key is written into the option Sender's key field.

In order to carry the identity information, in the embodiment of the disclsoure, the option Receiver's key field may be added in the MP_CAPABLE option of the SYN packet to write the identity information. The receiver may obtain different contents by analyzing the different fields.

Therefore, as another embodiment, the packet sending module may include:
an encrypting unit for obtaining the first session key through encrypting the first authentication parameter and the generated second authentication parameter using the encryption algorithm;
a first writing unit for writing the first session key into the option Sender's key field of the MP_CAPABLE option of the SYN packet;
a second writing unit for adding the option Receiver's key field in the MP_CAPABLE option of the SYN packet, and writing the identity information and the first random parameter into the option Receiver's key field in the MP_CAPABLE option; and
a sending unit for sending the SYN packet to the receiver.

The embodiments of the disclsoure improve the security of masterflow connection and may avoid malicious attacks from occupying the resources of the receiver. Further, it also facilitates the receiver for control. The problem of the overloading of the receiver may be avoided such that the performance of the receiver would not be affected.

It may be seen from the above description that the masterflow connection establishment device based on MPTCP as shown in Fig. 5 may be applied to the sender in the actual application. The sender may be any electronic device or server. The device may be integrated into the processor of the receiver, as a function of the processor, or may be an individual module for connecting to the processor. Therefore, as another possible implementation, the embodiment of the present disclosure further provides a sender. The sender as least includes a processor, and a storage, a sender and a receiver connected to the processor respectively.

The storage is used for storing a set of execution commands.

The processor is used for scheduling the execution commands of the storage and executes the following operations:
triggering the sender to send an authentication request carrying identify authentication information to a receiver based on the application layer security connection;
triggering the sender to receive identity information assigned for the sender and a first authentication parameter after the receiver verifies that the sender is legal according to the identify authentication information ;
obtaining a first session key through encrypting the first authentication parameter using the encryption algorithm;
triggering the sender to send an SYN packet carrying the identity information and the first session key to the receiver; and
triggering the sender to reply a confirmation packet to the receiver to establish a masterflow connection with the receiver after the sender receives synchronization confirmation SYN + ACK packet sent from the receiver.

Wherein the SYN + ACK packet is sent after searching, by the receiver, the corresponding stored first authentication parameter according to the identity information of the SYN packet, obtaining a second session key through encrypting the second authentication parameter using the encryption algorithm, and when the first session key matches with the second session key.

Further, the embodiment of the present disclsoure further provides a masterflow connection establishment system based on MPTCP including the sender and the receiver as described in the above embodiments. That is the sender is configured with the masterflow connection establishment device based on MPTCP as shown in Fig. 4, and the receiver is configured with the masterflow connection establishment device based on MPTCP as shown in Fig.5.

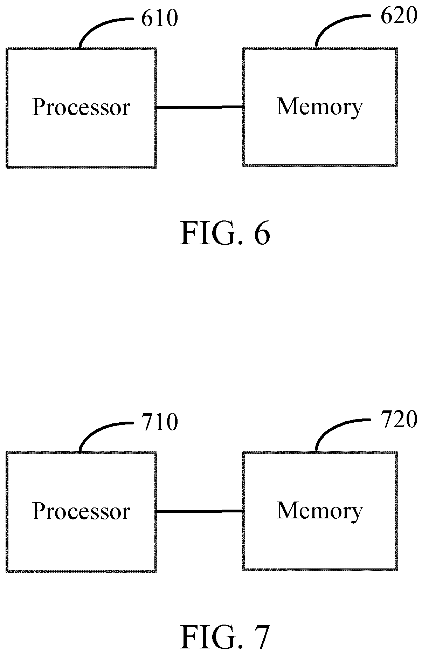

Fig. 6 illustrates the schematic diagram for the masterflow connection establishment device based on MPTCP according to the embodiment of the disclsoure. The device is specifically applied for the receiver. The device may include a processor 610 and a memory 620 storing one or more instrucitons.

When the one or more instuctions are executed by the processor 610, the processor executes the following steps:
receiving, by a receiver, an authentication request carrying identify authentication information sent from a sender based on the application layer security connection;
after the receiver verifies that the sender is legal according to the identify authentication information, assigning and storing identity information and a first authentication parameter for the sender by the receiver;
receiving, by the receiver, a synchronization SYN packet carrying the identity information and a first session key sent from the sender; wherein the first session key is obtained through encrypting the first authentication parameter using the encryption algorithm by the sender;
searching, by the receiver, the first authentication parameter corresponding to the stored identity information carried by the SYN packet, and obtaining a second session key through encrypting the first authentication parameter using the encryption algorithm; and
when the first session key matches with the second session key, replying, by the receiver, synchronization confirmation SYN + ACK packet to the sender, and establishing a masterflow connection with the sender after receiving the confirmation ACK packet from the sender.

In one embodiment, the first session key is obtained through encrypting the first authentication parameter and a second authentication parameter generated by the sender using the encryption algorithm by the sender; the SYN packet further carries the second authentication parameter; when the processor 610 executes the step of searching the first authentication parameter corresponding to the stored the identity information carried by the synchronization packet, and obtaining a second session key through encrypting the first authentication parameter using the encryption algorithm the processor 610 further executes the step of:
searching the first authentication parameter corresponding to the stored identity information carried by the synchronization packet, and obtaining the second session key through encrypting the first authentication parameter and the second authentication parameter using the encryption algorithm.

In one embodiment, when the processor 610 executes the step of the receiver verifying that the sender is legal according to the identify authentication information, the processor 610 further executes the step of verifying that the sender is legal when the identify authentication information of the sender exists among the different identify authentication information stored in advance searched by the receiver.

In one embodiment, after the processor 610 executes the step of receiving, by the receiver, a synchronization packet carrying the identity information and a first session key sent from the sender, the processor further executes the steps of determining whether the receiver starts the authentication function; and when the receiver starts the authentication function, then searching the first authentication parameter corresponding to the stored identity information carried by the synchronization packet, and obtaining the second session key through encrypting the first authentication parameter using the encryption algorithm.

Fig. 7 illustrates the schematic diagram for the masterflow connection establishment device based on MPTCP according to the embodiment of the disclsoure. The device is specifically applied for the receiver. The device may include a processor 710 and a memory 720 storing one or more instrucitons.

When the one or more instuctions are executed by the processor 710, the processor 710 executes the following steps:
sending, by a sender, an authentication request carrying identify authentication information to a receiver based on the application layer security connection;
after the receiver verifies that the sender is legal according to the identify authentication information, receiving identity information and a first authentication parameter assigned for the sender by the sender;
obtaining, by the sender, a first session key through encrypting the first authentication parameter using the encryption algorithm, and sending an SYN packet carrying the identity information and the first session key to the receiver; and
after the sender receives synchronization confirmation SYN + ACK packet sent from the receiver, replying a confirmation packet to the receiver to establish a masterflow connection with the receiver; wherein the SYN + ACK packet is sent after searching, by the receiver, the corresponding stored first authentication parameter according to the identity information of the SYN packet, obtaining a second session key through encrypting the second authentication parameter using the encryption algorithm, and when the first session key matches with the second session key.

In one embodiment, when the processor 710 executes the step of obtaining a first session key through encrypting the first authentication parameter using the encryption algorithm, and sending an SYN packet carrying the identity information and the first session key to the receiver, the processor 710 further executes the steps of:
obtaining the first session key through encrypting the first authentication parameter and the generated second authentication parameter using the encryption algorithm; and writing the first session key into the option Sender's key field of the MP_CAPABLE option of the SYN packet;
adding the option Receiver's key field in the MP_CAPABLE option of the SYN packet, and writing the identity information and the first authentication parameter into the option Receiver's key field in the MP_CAPABLE option; and sending the SYN packet to the receiver.

The apparatus embodiments described above are merely illustrative, wherein the unit described as a separate member may or may not be physically separate, and the component shown as a unit may or may not be physical units, i.e., it may be located in one place, or may be distributed to various network elements. Some or all of the modules may be selected to achieve the purpose of the present examples of the embodiments according to the actual need. Those of ordinary skill in the case may understand and implement the present disclosure without paying any creative work.

The above description of embodiments, those skilled in the art can clearly understand the various embodiments may be implemented by software plus a necessary universal hardware platform for implementation, and of course, also be implemented by hardware. Based on this understanding, the nature of the technical proposal or the part contributing to the prior art may be embodied in the form of a software product. The computer software product may be stored in a computer readable storage medium, such as ROM/RAM, magnetic disc, CD-ROM, including several instructions to instruct a computer device (a personal computer, a server, or a network equipment) to perform the method described in some parts of the various embodiments or examples.

Finally, it should be noted that the above embodiments are merely provided for describing the technical solutions of the present disclosure, but not intended to limit the present disclosure. Although reference to the embodiments of the present disclosure has been described in details, those skilled in the art will appreciate that the technical solutions described in the foregoing embodiments can be modified, or equivalently replaced for some technical features; and such modifications or replacements do not make the essence of the corresponding technical solutions depart from the spirit and scope of the technical implementation of the present disclosure.

## Claims

1. A masterflow connection establishment method based on Multipath Transmission Control Protocol (MPTCP), comprising:
receiving, by a receiver, an authentication request carrying identify authentication information sent from a sender based on the application layer security connection;
after the receiver verifies that the sender is legal according to the identify authentication information, assigning and storing identity information and a first authentication parameter for the sender by the receiver;
receiving, by the receiver, a synchronization SYN packet carrying the identity information and a first session key sent from the sender; wherein the first session key is obtained through encrypting the first authentication parameter using the encryption algorithm by the sender;
searching, by the receiver, the first authentication parameter corresponding to the stored identity information carried by the SYN packet, and obtaining a second session key through encrypting the first authentication parameter using the encryption algorithm; and
when the first session key matches with the second session key, replying, by the receiver, synchronization confirmation SYN + ACK packet to the sender, and establishing a masterflow connection with the sender after receiving the confirmation ACK packet from the sender.

2. The method according to claim 1, wherein the first session key is obtained through encrypting the first authentication parameter and a second authentication parameter generated by the sender using the encryption algorithm by the sender; the SYN packet further carries the second authentication parameter;
the step of searching the first authentication parameter corresponding to the stored the identity information carried by the synchronization packet, and obtaining a second session key through encrypting the first authentication parameter using the encryption algorithm comprising:
searching the first authentication parameter corresponding to the stored identity information carried by the synchronization packet, and obtaining the second session key through encrypting the first authentication parameter and the second authentication parameter using the encryption algorithm.

3. The method according to claim 1, wherein the step of the receiver verifying that the sender is legal according to the identify authentication information, comprising:
verifying that the sender is legal when the identify authentication information of the sender exists among the different identify authentication information stored in advance searched by the receiver.

4. The method according to claim 1, wherein after the step of receiving, by the receiver, a synchronization packet carrying the identity information and a first session key sent from the sender, the method further comprises:
determining whether the receiver starts the authentication function; and
when the receiver starts the authentication function, then searching the first authentication parameter corresponding to the stored identity information carried by the synchronization packet, and obtaining the second session key through encrypting the first authentication parameter using the encryption algorithm.

5. A masterflow connection establishment method based on Multipath Transmission Control Protocol (MPTCP), comprising:
sending, by a sender, an authentication request carrying identify authentication information to a receiver based on the application layer security connection;
after the receiver verifies that the sender is legal according to the identify authentication information, receiving identity information and a first authentication parameter assigned for the sender by the sender;
obtaining, by the sender, a first session key through encrypting the first authentication parameter using the encryption algorithm, and sending an SYN packet carrying the identity information and the first session key to the receiver; and
after the sender receives synchronization confirmation SYN + ACK packet sent from the receiver, replying a confirmation packet to the receiver to establish a masterflow connection with the receiver; wherein the SYN + ACK packet is sent after searching, by the receiver, the corresponding stored first authentication parameter according to the identity information of the SYN packet, obtaining a second session key through encrypting the second authentication parameter using the encryption algorithm, and when the first session key matches with the second session key.

6. The method according to claim 5, wherein the step of obtaining a first session key through encrypting the first authentication parameter using the encryption algorithm, and sending an SYN packet carrying the identity information and the first session key to the receiver comprises:
obtaining the first session key through encrypting the first authentication parameter and the generated second authentication parameter using the encryption algorithm; and
writing the first session key into the option Sender's key field of the MP_CAPABLE option of the SYN packet;
adding the option Receiver's key field in the MP_CAPABLE option of the SYN packet, and writing the identity information and the first authentication parameter into the option Receiver's key field in the MP_CAPABLE option; and
sending the SYN packet to the receiver.

7. A masterflow connection establishment device based on Multipath Transmission Control Protocol (MPTCP), comprising:
a processor; and
a memory storing one or more instrucitons;
wherein when the one or more instuctions are executed by the processor, the processor executes the following steps:
receiving, by a receiver, an authentication request carrying identify authentication information sent from a sender based on the application layer security connection;
after the receiver verifies that the sender is legal according to the identify authentication information, assigning and storing identity information and a first authentication parameter for the sender by the receiver;
receiving, by the receiver, a synchronization SYN packet carrying the identity information and a first session key sent from the sender; wherein the first session key is obtained through encrypting the first authentication parameter using the encryption algorithm by the sender;
searching, by the receiver, the first authentication parameter corresponding to the stored identity information carried by the SYN packet, and obtaining a second session key through encrypting the first authentication parameter using the encryption algorithm; and
when the first session key matches with the second session key, replying, by the receiver, synchronization confirmation SYN + ACK packet to the sender, and establishing a masterflow connection with the sender after receiving the confirmation ACK packet from the sender.

8. The device according to claim 7, wherein the first session key is obtained through encrypting the first authentication parameter and a second authentication parameter generated by the sender using the encryption algorithm by the sender; the SYN packet further carries the second authentication parameter;
when the processor executes the step of searching the first authentication parameter corresponding to the stored the identity information carried by the synchronization packet, and obtaining a second session key through encrypting the first authentication parameter using the encryption algorithm the processor further executes the step of:
searching the first authentication parameter corresponding to the stored identity information carried by the synchronization packet, and obtaining the second session key through encrypting the first authentication parameter and the second authentication parameter using the encryption algorithm.

9. The device according to claim 7, wherein when the processor executes the step of the receiver verifying that the sender is legal according to the identify authentication information, the processor further executes the step of:
verifying that the sender is legal when the identify authentication information of the sender exists among the different identify authentication information stored in advance searched by the receiver.

10. The device according to claim 7, wherein after the processor executes the step of receiving, by the receiver, a synchronization packet carrying the identity information and a first session key sent from the sender, the processor further executes the steps of:
determining whether the receiver starts the authentication function; and
when the receiver starts the authentication function, then searching the first authentication parameter corresponding to the stored identity information carried by the synchronization packet, and obtaining the second session key through encrypting the first authentication parameter using the encryption algorithm.

11. A masterflow connection establishment device based on Multipath Transmission Control Protocol (MPTCP), comprising:
a processor; and
a memory storing one or more instrucitons;
wherein when the one or more instuctions are executed by the processor, the processor executes the following steps:
sending, by a sender, an authentication request carrying identify authentication information to a receiver based on the application layer security connection;
after the receiver verifies that the sender is legal according to the identify authentication information, receiving identity information and a first authentication parameter assigned for the sender by the sender;
obtaining, by the sender, a first session key through encrypting the first authentication parameter using the encryption algorithm, and sending an SYN packet carrying the identity information and the first session key to the receiver; and
after the sender receives synchronization confirmation SYN + ACK packet sent from the receiver, replying a confirmation packet to the receiver to establish a masterflow connection with the receiver; wherein the SYN + ACK packet is sent after searching, by the receiver, the corresponding stored first authentication parameter according to the identity information of the SYN packet, obtaining a second session key through encrypting the second authentication parameter using the encryption algorithm, and when the first session key matches with the second session key.

12. The device according to claim 11, wherein when the processor executes the step of obtaining a first session key through encrypting the first authentication parameter using the encryption algorithm, and sending an SYN packet carrying the identity information and the first session key to the receiver, the processor further executes the steps of:
obtaining the first session key through encrypting the first authentication parameter and the generated second authentication parameter using the encryption algorithm; and
writing the first session key into the option Sender's key field of the MP_CAPABLE option of the SYN packet;
adding the option Receiver's key field in the MP_CAPABLE option of the SYN packet, and writing the identity information and the first authentication parameter into the option Receiver's key field in the MP_CAPABLE option; and
sending the SYN packet to the receiver.
